Europäisches Patentamt

European Patent Office

Office européen des brevets

(11) Veröffentlichungsnummer: **0 218 070**

**A1**

# (12) EUROPÄISCHE PATENTANMELDUNG

(21) Anmeldenummer: 86111737.2

(51) Int. Cl.⁴: **B01D 53/36** , **B01J 27/18**

(22) Anmeldetag: 25.08.86

(30) Priorität: 06.09.85 DE 3531809

(43) Veröffentlichungstag der Anmeldung:
15.04.87 Patentblatt 87/16

(84) Benannte Vertragsstaaten:
AT BE CH DE FR GB IT LI NL SE

(71) Anmelder: **KRAFTWERK UNION
AKTIENGESELLSCHAFT
Wiesenstrasse 35
D-4330 Mülheim (Ruhr)(DE)**

(72) Erfinder: **Schmelz, Helmut, Dr. Dipl.-Phys.
Rudolf-Sieck-Strasse 14
D-8210 Prien(DE)**
Erfinder: **Thomann, Helmut, Dr. Dipl.-Chem.
Kössener Strasse 15
D-8000 München 70(DE)**
Erfinder: **Kuschke, Renate
Lecherwiese 11
D-8152 Feldkirchen-Westerham(DE)**
Erfinder: **Wilbert, Eva-Helga
Ludwig-Merk-Strasse 11
D-8000 München 40(DE)**
Erfinder: **Gajewski, Wolfgang, Dr. Dipl.-Phys.
Bruckerweg 37
D-8520 Buckenhof(DE)**
Erfinder: **Sprehe, Josef, Dipl.-Ing.
Quittenweg 32a
D-8510 Fürth-Vach(DE)**
Erfinder: **Landgraf, Norbert, Dipl.-Ing. (FH)
Am Dachsberg 24
D-8501 Rückersdorf(DE)**
Erfinder: **Ranly, Hans, Dr.
Wassergasse 20
D-8521 Marloffstein(DE)**
Erfinder: **Balling, Lothar, Dipl.-Ing. (FH)
Marienstrasse 6
D-8510 Fürth(DE)**
Erfinder: **Reppisch, Richard
Thuringer Strasse 10
D-8522 Herzogenaurach(DE)**
Erfinder: **Hein, Dietmar, Prof. Dr.
Emdener Strasse 19
D-8500 Nürnberg 90(DE)**

(74) Vertreter: **Mehl, Ernst, Dipl.-Ing. et al
Postfach 22 01 76
D-8000 München 22(DE)**

EP 0 218 070 A1

(54) **Katalysatormaterial zur Reduktion von Stickoxiden.**

(57) Katalysatormaterial zur Reduktion von Stickoxiden in Rauchgasen in Gegenwart von Ammoniak, bei dem als Ausgangsmaterial Titanoxid verwendet wird und dieses gemeinsam mit Vanadiumoxid und ein oder mehreren Oxiden der Elemente Wolfram, Molybdän, Phosphor, Chrom, Kupfer, Eisen, Uran vermahlen und danach mindestens einer thermischen Behandlung unterzogen wird. Dabei sind Wolfram und Molybdän ganz oder teilweise durch Phosphor in Form seiner Oxide oder Phosphate substituiert.

## Katalysatormaterial zur Reduktion von Stickoxiden

Die Erfindung bezieht sich auf ein Katalysatormaterial zur Reduktion von Stickoxiden im Rauchgas in Gegenwart von Ammoniak.

Es ist bereits bekannt, Stickoxide in Abgasen in Gegenwart von Ammoniak katalytisch zu molekularem Stickstoff zu reduzieren. (DE-AS 24 58 888). Hierzu wird das Gasgemisch im Temperaturbereich von 150° bis 550°C mit einem Katalysator in Berührung gebracht, der aus einer innigen Mischung der nachfolgenden Komponenten:

(A) Titan in Form von Oxiden,
(B) wenigstens ein Metall aus der Gruppe
   B-1 Eisen und Vanadium in Form von Oxiden und/oder Sulfaten und/oder der Gruppe
   B-2 Molybdän, Wolfram, Nickel, Kobalt, Kupfer, Chrom und Uran in Form von Oxiden,
(C) Zinn in Form von Oxiden,
(D) Metalle aus der Gruppe Beryllium, Magnesium, Zink, Bor, Aluminium, Yttrium, seltene Erdenelemente, Silicium, Niob, Antimon, Wismut und Mangan in Form von Oxiden, besteht, wobei die Komponenten in den Atomverhältnissen A zu B zu C zu D = 1 zu 0,01 -10 zu 0 bis 0,2 zu 0 -0,15 vorhanden sind.

Mit einem solchen Katalysatormaterial lassen sich brauchbare Ergebnisse bei der Reduktion der Stickoxide erzielen. Die Umwandlung von NO in $N_2$ bei maximaler Konversionsorate ist dabei auf einen relativ schmalen Temperaturbereich beschränkt.

Der vorliegenden Erfindung liegt zum Einen die Aufgabe zugrunde, den Temperaturbereich, in dem das Katalysatormaterial bei maximaler Konversionsrate einsetzbar ist, zu erweitern. Darüber hinaus sollte hierbei auch ein umweltschonenderes Herstellverfahren erarbeitet werden, welches nach Möglichkeit auch zu einer preiswerteren Herstellung des Katalysatormaterials führen sollte.

Diese Aufgabe wird durch die Merkmale des Anspruchs 1 gelöst. Weitere vorteilhafte Weiterbildungen sind den Ansprüche 2 bis 6 zu entnehmen.

Durch die teilweise oder völlige Substitution der Oxide der Elemente Wolfram und Molybdän durch preiswerteren Phosphor in Form seiner Oxide oder Phosphate wird eine Verbilligung der Herstellung erreicht. Gleichzeitig wird durch den Einsatz dieser modifizierten Katalysatormaterialien der Temperaturbereich bei maximaler Konversionsrate nach höheren Temperaturen hin erweitert. Auch durch die zusätzliche weitere Substitution von Molybdän und Phosphor in Form seiner Oxide oder Phosphate durch Schwefel in Form von Sulfiten und/oder Sulfaten wird eine Verbilligung der Herstellung erreicht.

In zweckmäßiger Weiterbildung der Erfindung kann das Titanoxid mit einem oder mehreren der übrigen Komponenten vermahlen und dann einer thermischen Behandlung unterzogen werden und das Zwischenprodukt anschließend erneut mit einem oder mehreren Komponenten vermahlen und einer weiteren thermischen Behandlung unterzogen werden. Diese Herstellweise ermöglicht eine - schrittweise Belegung des Titandioxids.

Diese letztgenannte Herstellungsweise ist zugleich auch die Voraussetzung dafür, um das Titanoxid in besonders vorteilhafter Weiterbildung der Erfindung vor der ersten Temperaturbehandlung unter Ausschluß von Vanadiumoxid mit einem oder mehreren der übrigen Metalloxide zu vermahlen.

Weitere Einzelheiten der Erfindung werden anhand zweier Ausführungsbeispiele erläutert:
   Fig. 1 gibt die prozentuale Zusammensetzung der Hauptbestandteile von zwei verschiedenen Katalysatormaterialien an und
   Fig. 2 gibt die Abhängigkeit der NO-Konversionsrate von der Reaktionstemperatur an.

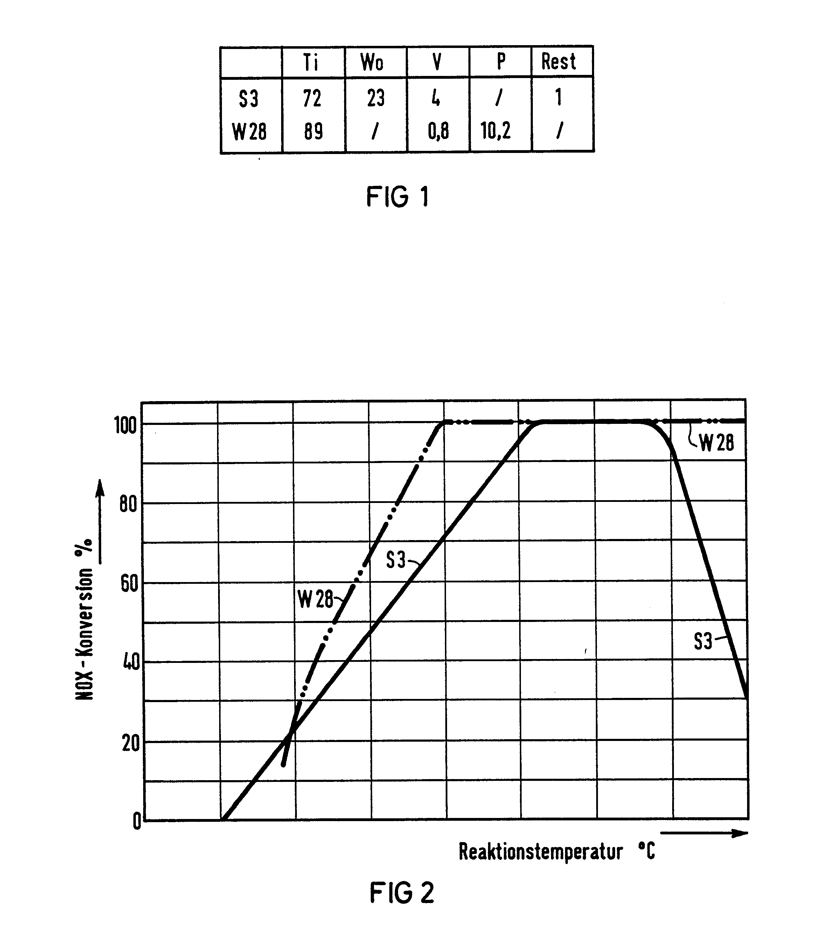

In der Fig. 1 sind die Atomprozente eines mit "S3" bezeichneten aus Titanoxid ($TiO_2$), Wolframoxid ($WO_3$) und Vanadiumoxid ($V_2O_5$) bestehenden Katalisatormaterials angegeben. Seine wesentlichen Elemente Titan, Wolfram und Vanadium stehen in Atomprozenten ausgedrückt, im Verhältnis von 72:23:4 zueinander. Dieser Katalysator "S3" dient im folgenden als Referenzkatalysator, er stammt von der Anmelderin der DE-AS 24 58 888 und dürfte im wesentlichen nach dem dort in Spalte 49, Zeile 34 bis Spalte 50, Zeile 14, vorbeschriebenen Verfahren hergestellt worden sein.

Die Katalysatortestung wurde in einem Integralreaktor vorgenommen, wobei ein Testgas bestehend aus NO, $NH_3$, $O_2$ und $N_2$ sowie geringeren Mengen an $SO_2$ und $H_2O$ eingesetzt wurde. Fig. 2 zeigt die Abhängigkeit der Konversionsrate von der Reaktionstemperatur. Man erkennt hier, daß die Konversion von NO zu $N_2$, die ab einer bestimmten Temperatur einsetzt, bei Steigung der Temperatur einem Maximalwert zustrebt, bei dem alles NO zu $N_2$ umgesetzt wird und oberhalb eines bestimmten Temperaturbereichs wieder abfällt. Die maximale Konversionsrate erstreckt sich dabei nur über einen ca. 200°C breiten Temperaturbereich. Das hat zur Folge, daß die Rauchgastemperatur am Katalysatorort für diesen Temperaturbereich geregelt werden muß, es sei denn, die Verbrennungsanlage wird mit konstanter Leistung gefahren.

Im Gegensatz zu diesem vorbekannten Katalysator "S3" wurde der erfindungsgemäße Katalysator "W28" aus Titanoxid in calcinierter Anatas-Modifikation hergestellt. Dieses Material wurde gemeinsam mit Vanadiumoxid und verschiedennen Phosphaten oder Phosphoroxiden in einer Suspension mit deionisiertem Wasser mit ca. 30% Feststoffanteil vermahlen und nach einer Vortrocknung bei ca. 500°C calciniert. Das erhaltene Produkt wurde sodann vor der Testung zerkleinert. Dieses mit "W28" bezeichnete Katalysatormaterial enthält, wie die Fig. 1 zeigt, 89 Atomprozent Titan, keinerlei Wolfram, nur 0,8 Atomprozent Vanadium und 10,2 Atomprozent Phosphor.

Fig. 2 zeigt die Temperaturabhängigkeit der Konversionsrate bei Einsatz dieses Materials unter gleichen Versuchsbedingungen. Man erkennt, daß die Konversion von NO zu $N_2$ erst bei einer etwas höheren Temperatur einsetzt, als bei dem vorbekannten Katalysatormaterial "S3", dafür aber steiler ansteigt und die maximale Konversionsrate bereits bei einer niedrigeren Temperatur erreicht. Besonders auffallend ist, daß dieses Katalysatormaterial "W28" seine maximale Konversionsrate, verglichen mit "S3" auch noch in einem höheren Temperaturbereich aufrecht erhält und sich dadurch vorteilhaft haft von letzterem unterscheidet. Im Vergleich zu "S3" wird für die maximale Konversionsrate hier ein breiterer Temperaturbereich beobachtet.

Der Vorteil dieses neuen Katalysatormaterials wirkt sich beim Betrieb der Verbrennungsanlage mit variabler Leistung besonders dadurch aus, daß damit Temperaturschwankungen am Ort des Katalysators ohne Einfluß auf die Konversionsrate bleiben. Ein weiterer Vorteil des erfindungsgemäßen Katalysator ist es, daß hier ein neues Herstellverfahren verwendet wird, das den Vorzug hat, nicht umweltbelastend zu sein. Es werden andere Ausgangsmaterialien verwendet und es wird ein rein mechanisches und thermisches Herstellverfahren eingesetzt. Es sind weder chemische Anlagen erforderlich, noch entstehen irgendwelche Abwasserproble. Insbesondere entfällt die bei dem vorbekannten Herstellverfahren des Katalysators "S3" zwangsläufige Freisetzung von Ammoniak bzw. Ammoniumverbindungen und anderen anzeigepflichtigen Stoffen. Darüber hinaus ist der Verfahrensablauf und die Prozeßüberwachung bei diesem neuen Herstellverfahren einfacher und daher ökonomischer. Eine weitere Kostenminderung ergibt sich dadurch, daß das teuere Wolfram und Vanadiumoxid durch Phosphoroxid bzw. Phosphat ersetzt wurde.

Statt des verwendetes deionisierten Wassers kann die Suspension der Ausgangsstoffe ebensogut in einer organischen Flüssigkeit, wie z.B. Alkohol erfolgen. Als Mühlen haben sich in allen Fällen Exenterscheibenmühlen und Ringkammermühlen bewährt.

## Ansprüche

1) Katalysatormaterial zur Reduktion von Sticknoxiden in Rauchgasen in Gegenwart von Ammoniak,

**dadurch gekennzeichnet,**

daß Titanoxid mit Vanadiumoxid und einem oder mehreren Oxiden der Elemente Wolfram, Molybdän, Phosphor, Chrom, Kupfer, Eisen und Uran vermahlen und anschließend mindestens einer thermischen Behandlung unterzogen wird, wobei die Oxide der Elemente Wolfram und Molybdän ganz oder teilweise durch Phosphor in Form seiner Oxide oder Phosphate substituiert sind und die Summe der in Form von Oxiden eingesetzten Elemente Wolfram, Molybdän, Vanadium, Chrom, Kupfer, Eisen und Uran in Mengen von kleiner als 1 Atom % bezogen auf Titan, Phosphor in Form seiner Oxide und/oder Phosphate in Mengen von 1 bis 30 Atom % bezogen auf Titan vorliegen.

2) Katalysatormaterial nach Anspruch 1,

**dadurch gekennzeichnet,**

daß Wolfram und Molybdän teilweise auch durch Schwefel in Form von Sulfiten und/oder Sulfaten substituiert sind und die Summe des in Form von Oxiden eingesetzte Elemente Wolfram, Molybdän, Vanadium, Chrom, Kupfer, Eisen und Uran in Mengen von kleiner als 1 Atom % bezogen auf Titan, Phosphor in Form seiner Oxide und/oder Phosphate und/oder Schwefel in Form von Sulfaten und/oder Sulfiten, jedoch zusammen in Mengen von 1 bis 30 Atom % bezogen auf Titan vorliegen.

3) Katalysatormaterial nach Anspruch 1,

**dadurch gekennzeichnet,**

daß Titanoxid mit einem oder mehreren Oxiden der übrigen Komponenten vermahlen und dann einer thermischen Behandlung unterzogen wird und das Zwischenprodukt anschließend erneut mit einem oder mehreren Oxiden der übrigen Komponenten vermahlen und einer weiteren thermischen Behandlung unterzogen wird.

4) Katalysatormaterial nach Anspruch 3,

**dadurch gekennzeichnet,**

daß die erste Vermahlung unter Ausschluß von Vanadiumoxid erfolgt.

5) Katalysatormaterial nach Anspruch 3,

**dadurch gekennzeichnet,**

daß viele Vermahlungsstufen und thermische Behandlungsstufen abwechselnd hintereinander geschaltet sind und zu jeder Vermahlungsstufe jeweils weitere Oxide der übrigen Elemente zugegeben werden.

6) Katalysatormaterial nach Anspruch 1,

**dadurch gekennzeichnet,**

daß das Material bei der thermischen Behandlung auf eine Temperatur im Bereich von 200° bis 900°C aufgeheizt wird.

7) Katalysatormaterial nach Anspruch 1,

**dadurch gekennzeichnet,**

daß die Vermahlung in Anwesenheit anorganischer und/oder organischer Flüssigkeiten erfolgt.

8) Katalysatormaterial nach Anspruch 1,

**dadurch gekennzeichnet,**

daß die Komponenten solange miteinander in einer geeigneten Mühle vermahlen werden, bis eine Oberfläche von 10 bis 500 m²/g entsteht.

|      | Ti | Wo | V   | P    | Rest |
|------|----|----|-----|------|------|
| S3   | 72 | 23 | 4   | /    | 1    |
| W28  | 89 | /  | 0,8 | 10,2 | /    |

## FIG 1

## FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 018 706 (AKIRA INOUE)<br>* Zusammenfassung *<br><br>----- | 1 | B 01 D 53/36<br>B 01 J 27/18 |
| | | | **RECHERCHIERTE SACHGEBIETE (Int. Cl.4)**<br><br>B 01 D 53/00<br>B 01 J 27/00 |

Der vorliegende Recherchenbericht wurde für alle Patentansprüche erstellt.

| Recherchenort | Abschlußdatum der Recherche | Prüfer |
|---|---|---|
| DEN HAAG | 12-12-1986 | BOGAERTS M.L.M. |